# EUROPÄISCHE PATENTSCHRIFT

(11) **EP 3 497 317 B1**
(45) Veröffentlichungstag und Bekanntmachung des Hinweises auf die Patenterteilung: **06.01.2021**
(21) Anmeldenummer: 17751026.0
(22) Anmeldetag: 12.07.2017
(51) Int. Cl.: F02M 21/02

(54) **ELEKTROMAGNETISCH BETÄTIGBARES VENTIL ZUM EINBLASEN VON GAS**
ELECTROMAGNETICALLY ACTUATABLE VALVE FOR INJECTING GAS
SOUPAPE À ACTIONNEMENT ÉLECTROMAGNÉTIQUE PERMETTANT D'INSUFFLER DU GAZ

(30) Priorität: 10.08.2016 DE 102016214882
(43) Veröffentlichungstag der Anmeldung: 19.06.2019
(73) Patentinhaber: Robert Bosch GmbH, 70442 Stuttgart (DE)
(72) Erfinder: HAWA, Niki, 4073 Wilhering (AT); HAINBERGER, Martin, 4020 Linz (AT)
(86) Internationale Anmeldenummer: PCT/EP2017/067547
(87) Internationale Veröffentlichungsnummer: WO 2018/028917

(56) Entgegenhaltungen:
- EP-A1- 1 717 501
- DE-A1-102006 006 883
- DE-A1-102013 202 610
- DE-A1-102014 205 496
- DE-A1-102014 219 019
- DE-A1-102014 225 922

## Beschreibung

Die Erfindung betrifft ein elektromagnetisch betätigbares Ventil zum Einblasen von Gas in einen Ansaugtrakt einer Verbrennungskraftmaschine mit den Merkmalen des Oberbegriffs des Anspruchs 1.

### Stand der Technik

Aus der Offenlegungsschrift DE 10 2014 219 019 A1 ist ein Gasventil, insbesondere ein Dosierventil für ein gasförmiges Medium, mit einem an einem Ventilgehäuse angeordneten Ventilsitzkörper und einem relativ zum Ventilsitzkörper hubbeweglichen Schließkörper bekannt. Um die Dauerhaltbarkeit des Gasventils zu verbessern, wird in dieser Druckschrift ein Prallkörper vorgeschlagen, der die Aufprallgeschwindigkeit und/oder die Aufprallenergie des Schließkörpers auf den Ventilsitz mindert. Der Prallkörper hat somit eine dämpfende Wirkung und verhindert, dass der Schließkörper beim Schließen ungebremst gegen den Ventilsitzkörper schlägt. Auf diese Weise kann der Verschleiß im Bereich der jeweiligen Kontaktflächen am Schließkörper und am Ventilsitzkörper verringert werden, wodurch die Lebensdauer steigt. Das bekannte Gasventil ist insbesondere ein Gaseinlassventil für eine Brennkraftmaschine, das der Einspritzung von Brenngas in einen Brennraum der Brennkraftmaschine oder in einem vorgelagerten Ansaugkanal dient.

Ausgehend von dem vorstehend genannten Stand der Technik liegt der vorliegenden Erfindung die Aufgabe zugrunde, ein elektromagnetisch betätigbares Ventil zum Einblasen von Gas in einen Ansaugtrakt einer Verbrennungskraftmaschine anzugeben, das eine hohe Lebensdauer besitzt und zugleich einfach und kostengünstig herstellbar ist.

Zur Lösung der Aufgabe wird das elektromagnetisch betätigbare Ventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Einblasen von Gas in einen Ansaugtrakt einer Verbrennungskraftmaschine vorgeschlagene elektromagnetisch betätigbare Ventil umfasst ein Ventilgehäuse und einen mit dem Ventilgehäuse verbundenen Ventilsitzkörper, in dem mindestens eine Auslassöffnung ausgebildet ist. Ferner umfasst das Ventil ein platten- oder tellerförmiges Ventilschließelement, das zum Freigeben und Verschließen der mindestens einen Auslassöffnung hubbeweglich gegenüber dem Ventilsitzkörper im Ventilgehäuse aufgenommen ist. Erfindungsgemäß weist das platten- oder tellerförmige Ventilschließelement einen in Kontakt mit dem Ventilsitzkörper bringbaren äußeren Kantenbereich mit verringerter Steifigkeit auf. Die Steifigkeit ist in dem Maße gegenüber dem restlichen Ventilschließelement verringert, dass der äußere Kantenbereich eine gewisse Nachgiebigkeit bzw. elastische Verformbarkeit aufweist. Dies ist insbesondere dann von Vorteil, wenn das Ventilschließelement beim Schließen in eine Schiefstellung gerät und über einen äußeren Kantenbereich am Ventilsitzkörper anschlägt. Denn dann wird ein Teil der Bewegungsenergie in Verformungsenergie umgewandelt und die Belastung des Ventilsitzkörpers im Anschlagbereich ist geringer. Insbesondere verringert sich die Flächenpressung des Ventilsitzkörpers im Anschlagbereich. Dies hat wiederum eine Reduzierung des Verschleißes bzw. eine Steigerung der Lebensdauer des Ventils zur Folge.

Aufgrund fertigungs- und/oder montagebedingter Toleranzen nimmt das Ventilschließelement beim Schließen fast immer eine zumindest geringfügige Schiefstellung ein. Die Vorteile der Erfindung kommen daher nicht nur in Ausnahmefällen, sondern regelmäßig zum Tragen.

Das Ventilschließelement weist einen umlaufenden äußeren Kantenbereich mit verringerter Steifigkeit auf. Auf diese Weise ist der gesamte äußere Kantenbereich des Ventilschließelements vor erhöhtem Verschleiß geschützt, und zwar unabhängig davon, in welche Richtung sich das Ventilschließelement beim Schließen neigt.

Die verringerte Steifigkeit des äußeren Kantenbereichs des Ventilschließelements ist formbedingt. Das Ventilschließelement weist eine Kantengeometrie auf, die dergestalt ist, dass die Kante eine gewisse Nachgiebigkeit besitzt.

Vorzugsweise wird die Steifigkeit des Kantenbereichs an die zu erwartende Auftreffgeschwindigkeit beim Schließen des Ventils und/oder an die zu erwartende Schiefstellung des Ventilschließelements angepasst. Beide Parameter können mittels Simulation und/oder Versuch ermittelt werden. Ist die gewünschte Steifigkeit ermittelt worden, kann bzw. können die Form und/oder das Material des Kantenbereichs festgelegt werden. Dabei sollte darauf geachtet werden, dass der Kantenbereich trotz einer verringerten Steifigkeit eine ausreichend hohe mechanische Festigkeit aufweist, um den Belastungen beim Anschlagen an den Ventilsitzkörper standzuhalten.

Das Ventilschließelement weist einen sich nach radial außen erstreckenden Bund zur Ausbildung des äußeren Kantenbereichs mit verringerter Steifigkeit auf. Über die Abmessungen und/oder die Querschnittform des Bunds kann die Steifigkeit gezielt gesteuert werden. Zugleich lässt sich der Bund einfach und kostengünstig herstellen. Sofern er nicht bereits bei der Herstellung, insbesondere Formgebung, des Ventilschließelements mit ausgebildet wird, kann er nachträglich in einem materialabtragenden Verfahren, wie beispielsweise mittels Drehen, hergestellt werden.

Dabei weist das Ventilschließelement eine gestufte Außenkontur zur Ausbildung des äußeren Kantenbereichs mit verringerter Steifigkeit auf. Die gestufte Außenkontur ist ebenfalls besonders einfach und kostengünstig mittels Drehen herstellbar. Beispielsweise kann ein Ventilschließelement mit einer gestuften Außenkontur zwei Bundabschnitte aufweisen, die in axialer Richtung zueinander beabstandet sind.

Gemäß einer Ausführungsform der Erfindung ist das Ventilschließelement zur Ausbildung des äußeren Kantenbereichs mit einem Ringkörper kraft-, form- und/oder stoffschlüssig verbunden, der gegenüber dem Ventilschließelement eine geringere Steifigkeit besitzt.

Weiter wird vorgeschlagen, dass der Kantenbereich flächenbündig in Bezug auf eine Dichtfläche des Ventilschließelements ausgebildet oder angeordnet ist. Dadurch ist sichergestellt, dass der äußere Kantenbereich - selbst bei geringer Schiefstellung des Ventilschließelements - zuerst am Ventilsitzkörper anschlägt. Ist das Ventilschließelement exakt parallel zum Ventilsitzkörper ausgerichtet, schlägt das Ventilschließelement über die gesamte Dichtfläche am Ventilsitzkörper an.

Die mindestens eine im Ventilsitzkörper ausgebildete Auslassöffnung ist als kreisbogenförmig verlaufender Schlitz ausgeführt. Auf diese Weise kann ein vergleichsweise großer Abströmquerschnitt geschaffen werden. Dabei sind mehrere Auslassöffnungen konzentrisch zueinander angeordnet, um die Durchflussmenge bei geöffnetem Gasventil weiter zu erhöhen.

Um die Anströmbarkeit der mindestens einen im Ventilsitzkörper ausgebildeten Auslassöffnung zu verbessern, wird vorgeschlagen, dass im Ventilschließelement mindestens eine Durchlassöffnung ausgebildet ist. Diese ist vorzugsweise als ein kreisbogenförmig verlaufender Schlitz ausgeführt, der in radialer Richtung versetzt zur mindestens einen Auslassöffnung des Ventilsitzkörpers angeordnet ist. Auf diese Weise ist sichergestellt, dass das Ventil immer sicher schließt, und zwar unabhängig von der Winkellage des Ventilschließelements zum Ventilsitzkörper.

In Weiterbildung der Erfindung wird vorgeschlagen, dass das Ventilschließelement durch einen zumindest abschnittsweise platten- oder tellerförmig ausgebildeten Anker ausgebildet wird oder mit einem Anker verbunden ist. Bildet der Anker zugleich das platten- oder tellerförmige Ventilschließelement aus, kann die Anzahl der erforderlichen Bauteile reduziert werden. Zugleich wird eine besonders kompaktbauende Anordnung erreicht. Die separate Ausbildung des Ankers ermöglicht die Verwendung eines gesonderten Materials, das genau auf die Funktion des Ankers abgestimmt ist. Insbesondere kann ein Material gewählt werden, das besonders gute magnetische Eigenschaften besitzt.

Des Weiteren bevorzugt ist das Ventilschließelement in Richtung des Ventilsitzkörpers von der Federkraft mindestens einer Feder unmittelbar oder mittelbar beaufschlagt. Die Federkraft der mindestens einen Feder hält das Gasventil in unbestromtem Zustand geschlossen. Zum Öffnen muss eine Magnetspule eines Elektromagneten bestromt werden, so dass ein Magnetfeld aufgebaut wird, dessen Magnetkraft den Anker einschließlich Ventilschließelement entgegen der Federkraft der mindestens einen Feder anzieht. Dabei hebt das Ventilschließelement vom Ventilsitzkörper ab und gibt die mindestens eine Auslassöffnung frei.

Eine bevorzugte Ausführungsform der Erfindung wird nachfolgend anhand der beigefügten Zeichnungen näher erläutert. Diese zeigen:
Fig. 1 einen schematischen Längsschnitt durch ein erfindungsgemäßes Ventil,
Fig. 2 einen vergrößerten Ausschnitt der Fig. 1. im Bereich des verformbaren Kantenbereichs schematische Draufsicht auf die Ankerbaugruppe der Fig. 1. und
Fig. 3 einen vergrößerten Ausschnitt einer alternativen Ausführungsform.

### Ausführliche Beschreibung der Zeichnungen

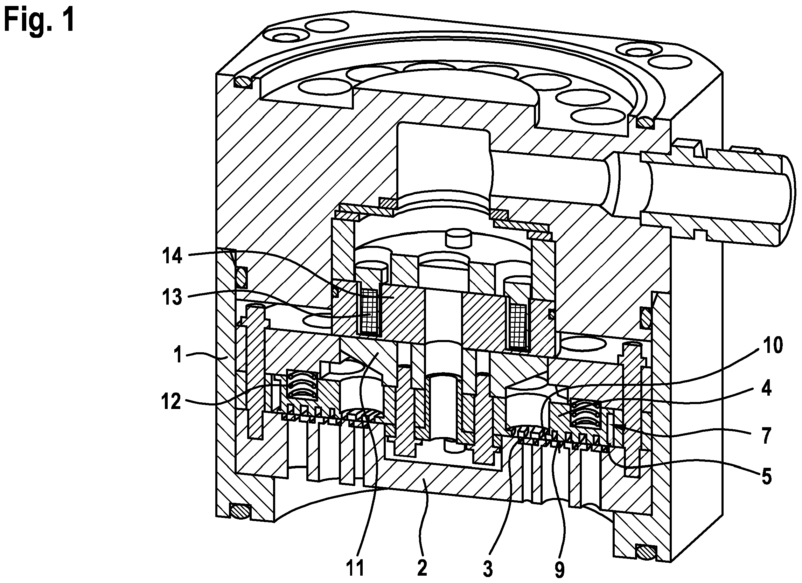

Das in der Fig. 1 dargestellte elektromagnetische Ventil für ein gasförmiges Medium, insbesondere für einen gasförmigen Brennstoff, umfasst ein im Wesentlichen hohlzylinderförmiges Ventilgehäuse 1, in das ein plattenförmiger Ventilsitzkörper 2 eingesetzt ist. Im Ventilsitzkörper 2 sind mehrere kreisbogenförmig verlaufende und konzentrisch angeordnete Auslassöffnungen 3 ausgebildet, über welche das gasförmige Medium bei geöffnetem Ventil austragbar ist. In der Fig. 1 ist das Ventil geschlossen dargestellt.

In Schließstellung werden die Auslassöffnungen 3 von einem Ventilschließelement 4 verschlossen, das ebenfalls plattenförmig ausgebildet ist und auf seiner dem Ventilsitzkörper 2 zugewandten Stirnfläche eine Dichtfläche 9 besitzt. Die Dichtfläche 9 wird von mehreren kreisbogenförmig verlaufenden und konzentrisch angeordneten Durchlassöffnungen 10 durchsetzt, die radial versetzt zu den Auslassöffnungen 3 des Ventilsitzkörpers 2 angeordnet sind. Dadurch ist sichergestellt, dass die Dichtfläche 9 die Auslassöffnungen 3 dicht verschließt, wenn das Ventilschließelement 4 am Ventilsitzkörper 2 anliegt.

Zum Öffnen des Ventils wird eine Magnetspule 13 bestromt, deren Magnetkraft auf einen Anker 11 einwirkt, der mit dem Ventilschließelement 4 fest verbunden ist. Bei einer Bestromung der Magnetspule 13 bewegen sich somit der Anker 11 und das Ventilschließelement 4 gemeinsam in Richtung eines Magnetkörpers 14, der die Magnetspule 13 umschließt. Die Bewegung von Anker 11 und Ventilschließelement 4 erfolgt entgegen der Federkraft von Federn 12, die am Ventilschließelement abgestützt sind und dieses gegen den Ventilsitzkörper 2 axial vorspannen. Wird die Bestromung der Magnetspule 13 beendet, stellen die Federn 12 das Ventilschließelement 4 einschließlich Anker 11 in ihre Ausgangslage zurück und das Ventil schließt.

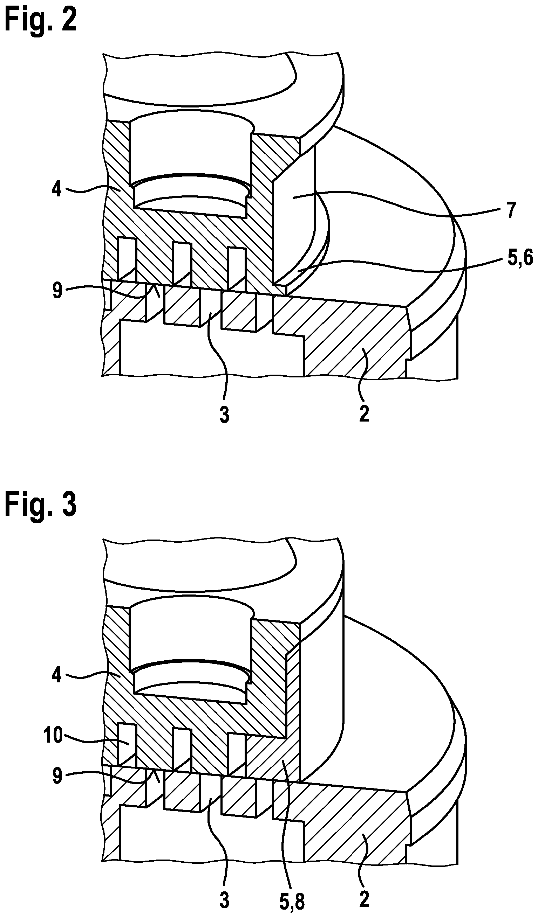

Beim Schließen des Ventils kann es zu einer Schiefstellung des Ventilschließelements 4 kommen, so dass ein äußerer Kantenbereich 5 des Ventilschließelements 4 zuerst auf den Ventilsitzkörper 2 auftrifft. Um eine erhöhte Belastung des Ventilsitzkörpers 2 aufgrund einer erhöhten Flächenpressung zu verhindern, weist das Ventilschließelement 4 des in der Fig. 1 dargestellten Ventils einen äußeren Kantenbereich 5 auf, der durch einen Bund 6 gebildet wird, der gegenüber dem Ventilschließelement 4 formbedingt eine verringerte Steifigkeit besitzt. Der Bund 6 ist Bestandteil einer gestuften Außenkontur 7, die mittels Drehen hergestellt worden ist (siehe auch Fig. 2).

Der Fig. 3 ist eine alternative Ausführungsform eines äußeren Kantenbereichs 5 eines Ventilschließelements 4 für ein erfindungsgemäßes Ventil zu entnehmen. Die geringere Steifigkeit des äußeren Kantenbereichs 5 wird hier durch einen Ringkörper 8 bewirkt, der fest mit dem Ventilschließelement 4 verbunden ist und aus einem zumindest geringfügig elastisch verformbaren Material gebildet ist. Trifft das Ventilschließelement 4 zuerst mit dem äußeren Kantenbereich 5 auf den Ventilsitzkörper 2 auf, wird ein Teil der Bewegungsenergie in Verformungsenergie umgewandelt, so dass die Belastung des Ventilsitzkörpers 2 verringert wird. In der Folge sinkt der Verschleiß und die Lebensdauer des Ventils steigt.

Die in der Fig. 3 dargestellte Querschnittsform des Ringkörpers 8 ist lediglich beispielhaft gewählt. Abwandlungen sind möglich soweit die Merkmale des Anspruchs 1 realisiert werden.

## Patentansprüche

1. Elektromagnetisch betätigbares Ventil zum Einblasen von Gas in einen Ansaugtrakt einer Verbrennungskraftmaschine, umfassend ein Ventilgehäuse (1) und einen mit dem Ventilgehäuse (1) verbundenen Ventilsitzkörper (2), in dem mehrere Auslassöffnungen (3) ausgebildet sind, ferner umfassend ein platten- oder tellerförmiges Ventilschließelement (4), das zum Freigeben und Verschließen der mindestens einen Auslassöffnung (3) hubbeweglich gegenüber dem Ventilsitzkörper (2) im Ventilgehäuse (1) aufgenommen ist,
**dadurch gekennzeichnet, dass** das platten- oder tellerförmige Ventilschließelement (4) einen in Kontakt mit dem Ventilsitzkörper (2) bringbaren äußeren Kantenbereich (5) mit verringerter Steifigkeit aufweist und das Ventilschließelement (4) zur Ausbildung des Kantenbereichs (5) einen sich nach radial außen erstreckenden Bund (6) aufweist, der gegenüber dem Ventilschließelement (4) formbedingt die verringerte Steifigkeit aufweist, wobei der Bund (6) eine gestufte Außenkontur (7) besitzt, und die Auslassöffnungen (3) als kreisbogenförmig verlaufende Schlitze ausgeführt sind, wobei mehrere Auslassöffnungen (3) konzentrisch zueinander angeordnet sind.

2. Ventil nach Anspruch 1,
**dadurch gekennzeichnet, dass** das Ventilschließelement (4) zur Ausbildung des Kantenbereichs (5) mit einem Ringkörper (8) kraft-, form- und/oder stoffschlüssig verbunden ist, der gegenüber dem Ventilschließelement (4) eine geringere Steifigkeit besitzt.

3. Ventil nach Anspruch 1 oder 2,
**dadurch gekennzeichnet, dass** der Kantenbereich (5) flächenbündig in Bezug auf eine Dichtfläche (9) des Ventilschließelements (4) ausgebildet oder angeordnet ist.

4. Ventil nach einem der vorhergehenden Ansprüche,
**dadurch gekennzeichnet, dass** im Ventilschließelement (4) mindestens eine Durchlassöffnung (10) ausgebildet ist, die vorzugsweise als ein kreisbogenförmig verlaufender Schlitz ausgeführt ist, der in radialer Richtung versetzt zur mindestens einen Auslassöffnung (3) des Ventilsitzkörpers (2) angeordnet ist.

5. Ventil nach einem der vorhergehenden Ansprüche,
**dadurch gekennzeichnet, dass** das Ventilschließelement (4) durch einen zumindest abschnittsweise platten- oder tellerförmig ausgebildeten Anker (11) ausgebildet wird oder mit einem Anker (11) verbunden ist.

6. Ventil nach einem der vorhergehenden Ansprüche,
**dadurch gekennzeichnet, dass** das Ventilschließelement (4) in Richtung des Ventilsitzkörpers (2) von der Federkraft mindestens einer Feder (12) unmittelbar oder mittelbar beaufschlagt ist.

## Claims

1. Electromagnetically actuatable valve for injecting gas into an intake tract of an internal combustion engine, comprising a valve housing (1) and a valve seat body (2) which is connected to the valve housing (1) and in which there are formed multiple outlet openings (3), furthermore comprising a plate-like or disc-like valve closing element (4) which, for the purposes of opening and closing the at least one outlet opening (3), is received in the valve housing (1) so as to be capable of performing stroke movements relative to the valve seat body (2), **characterized in that** the plate-like or disc-like valve closing element (4) has an outer edge region (5) which can be placed in contact with the valve seat body (2) and which is of reduced stiffness, and the valve closing element (4) has a radially outwardly extending collar (6) for forming the edge region (5), which collar has the reduced stiffness in relation to the valve closing element (4) owing to the shape of said collar, wherein the collar (6) has a stepped outer contour (7), and the outlet openings (3) are formed as slots running in a circular arc shape, wherein multiple outlet openings (3) are arranged concentrically with respect to one another.

2. Valve according to Claim 1,
**characterized in that** the valve closing element (4) is, in order to form the edge region (5), connected in non-positively locking, positively locking and/or cohesive fashion to a ring body (8) which has a lower stiffness than the valve closing element (4).

3. Valve according to Claim 1 or 2,
**characterized in that** the edge region (5) is formed or arranged so as to be superficially flush with a sealing surface (9) of the valve closing element (4).

4. Valve according to any of the preceding claims,
**characterized in that**, in the valve closing element (4), there is formed at least one passage opening (10) which is preferably formed as a slot running in a circular arc shape, which slot is arranged so as to be offset in a radial direction with respect to the at least one outlet opening (3) of the valve seat body (2).

5. Valve according to any of the preceding claims,
**characterized in that** the valve closing element (4) is formed by an armature (11) of plate-like or disc-like form at least in certain sections, or is connected to an armature (11).

6. Valve according to any of the preceding claims,
**characterized in that** the valve closing element (4) is directly or indirectly acted on in the direction of the valve seat body (2) by the spring force of at least one spring (12).

## Revendications

1. Soupape à commande électromagnétique pour insuffler du gaz dans un conduit d'admission d'un moteur à combustion interne, comprenant un boîtier de soupape (1) et un corps de siège de soupape (2) connecté au boîtier de soupape (1), dans lequel sont réalisées plusieurs ouvertures de sortie (3), comprenant en outre un élément de fermeture de soupape (4) en forme de plaque ou de plateau, qui est reçu dans le boîtier de soupape (1) avec une course de déplacement par rapport au corps de siège de soupape (2) pour ouvrir et fermer l'au moins une ouverture de sortie (3),
**caractérisée en ce que** l'élément de fermeture de soupape en forme de plaque ou de plateau (4) présente une région d'arête extérieure (5) pouvant être amenée en contact avec le corps de siège de soupape (2), de rigidité réduite, et l'élément de fermeture de soupape (4) présente un épaulement (6) s'étendant radialement vers l'extérieur pour constituer la région d'arête (5), qui présente, en raison de sa forme, la rigidité réduite par rapport à l'élément de fermeture de soupape (4), l'épaulement (6) possédant un contour extérieur étagé (7) et les ouvertures de sortie (3) étant réalisées sous forme de fentes s'étendant en forme d'arc de cercle, plusieurs ouvertures de sortie (3) étant disposées concentriquement les unes par rapport aux autres.

2. Soupape selon la revendication 1,
**caractérisée en ce que** l'élément de fermeture de soupape (4), pour réaliser la région d'arête (5), est connecté par engagement par force, par correspondance de formes et/ou par liaison de matière à un corps annulaire (8) qui possède une plus faible rigidité par rapport à l'élément de fermeture de soupape (4).

3. Soupape selon la revendication 1 ou 2,
**caractérisée en ce que** la région d'arête (5) est réalisée et/ou disposée en affleurement de surface par rapport à une surface d'étanchéité (9) de l'élément de fermeture de soupape (4).

4. Soupape selon l'une quelconque des revendications précédentes,
**caractérisée en ce qu'au** moins une ouverture de passage (10) est réalisée dans l'élément de fermeture de soupape (4), laquelle est réalisée de préférence sous forme de fente s'étendant en forme d'arc de cercle, qui est disposée de manière décalée dans la direction radiale par rapport à au moins une ouverture de sortie (3) du corps de siège de soupape (2).

5. Soupape selon l'une quelconque des revendications précédentes,
**caractérisée en ce que** l'élément de fermeture de soupape (4) est réalisé par un induit (11) réalisé au moins en partie en forme de plaque ou de plateau, ou est connecté à un induit (11).

6. Soupape selon l'une quelconque des revendications précédentes,
**caractérisée en ce que** l'élément de fermeture de soupape (4) est sollicité directement ou indirectement dans la direction du corps de siège de soupape (2) par la force de ressort d'au moins un ressort (12).
